# EUROPEAN PATENT APPLICATION

(11) **EP 2 728 252 A1**
(43) Date of publication of application: **07.05.2014**
(21) Application number: 13394001.5
(22) Date of filing: 06.11.2013
(51) Int. Cl.: F21V 29/02, F21V 29/00, F21V 31/03, F21K 99/00, F21V 5/02

(54) **A retrofit light emitting diode lamp**

(30) Priority: 06.11.2012 GB 201219967
(71) Applicant: Connect Electronics Limited, Dublin (IE)
(72) Inventor: Donegan, Paul, Dublin 11 (IE)
(74) Representative: O'Connor, Michael Donal

(57) **Abstract**

This invention relates to a retrofit light emitting diode (LED) lamp comprising a casing, a base protruding outwardly from the casing and a cylindrical bulb protruding outwardly from the casing. The retrofit LED lamp further comprises an LED that directs light into the substantially cylindrical bulb. The casing houses an LED mounting plate, LED electronic circuitry and an LED cooling component. There is provided an optical lighting film covering the cylindrical surface of the bulb. By having such an arrangement, the light emitted by the LED emanating from the bulb will be substantially omnidirectional in nature rather than being focused narrowly. Furthermore, due to the improved optical performance, the construction will allow lower rated LEDs to be used thereby saving cost, improving performance and simplifying control. The construction also allows for a retrofit LED lamp with an improved ingress protection rating thereby increasing the scope of use of the retrofit LED lamp.

## Description

### Introduction

This invention relates to a retrofit light emitting diode (LED) lamp.

It is generally accepted that LED lamps are a viable alternative to incandescent light bulbs and fluorescent light bulbs. Although the purchase price of the LED lamps are still more expensive than the other known types of light bulbs, typically, the LED lamps last longer and are several times more efficient than incandescent light bulbs and fluorescent bulbs resulting in significantly lower maintenance costs and electricity consumption. Therefore, the additional cost of purchase is more than compensated for by lower running costs over time and when the total cost of operation and maintenance of the LED lamps and incandescent light or fluorescent bulbs are taken into account, the LED lamps compare very favourably relative to the other types of bulbs.

One type of lamp that has also been widely used is the mercury vapour lamp. Mercury vapour lamps are commonly used for outdoor lighting applications such as pedestrian walkway lighting applications. The advantage of mercury vapour lamps is that they provide bright, substantially omnidirectional light. However, due to their relatively high mercury content, the supply of mercury vapour lamps is being phased out in many jurisdictions. Indeed, mercury vapour lamps are due to be outlawed in the European Union from 2015 onwards. It would be advantageous if there were a retrofit LED lamp that could be used as a direct substitute for the mercury vapour lamp however the known constructions of LED lamps are unsuitable for many of the applications of the mercury vapour lamps.

Generally speaking, the known LED lamps provide a relatively concentrated, directional beam which is unsuitable for many outdoor lighting applications where the omnidirectional nature of the light from the mercury vapour lamp is preferred. Secondly, the known constructions of retrofit LED lamps are prone to ingress of dirt and moisture and are therefore deemed unsuitable for many of the outdoor applications that the mercury lamps are used for. Thirdly, in order for the retrofit LED lamps to provide adequate luminance and have sufficient longevity, it is important to carefully regulate the junction temperature of the LED. If the junction temperature is not carefully controlled, the luminance and longevity will be severely curtailed. Control of the junction temperature is complexified when the LED is located outdoors where ambient temperature fluctuations tend to be more sudden and ambient temperature differentials tend to be more extreme.

It is an object of the present invention to provide a retrofit LED lamp that is suitable to replace a mercury vapour lamp. It is a further object of the present invention to provide a retrofit LED lamp that is compact, simple and inexpensive to manufacture and that provides a useful choice to the consumer.

### Statements of Invention

According to the invention there is provided a retrofit light emitting diode (LED) lamp comprising a casing, a base protruding outwardly from the casing and a substantially cylindrical bulb protruding outwardly from the casing, an LED housed in one of the bulb and the casing and positioned to emit light directed into the substantially cylindrical bulb, the casing housing an LED mounting plate, an LED electronic circuitry and an LED cooling component, and in which there is provided an optical lighting film covering the cylindrical surface of the bulb.

By having such a construction of retrofit LED lamp with a cylindrical bulb and an optical lighting film covering the cylindrical surface of the bulb, the retrofit LED lamp will provide substantially omnidirectional light rather than a more narrowly focused beam of light. The light from the LED will travel along the cylinder and be directed outwards by the optical lighting film. Such an arrangement may allow a lower rating LED to be used which will lower the temperature generated by the LED during operation and facilitate control of LED junction temperature. This is also a particularly simple and inexpensive construction of LED lamp that is seen as a suitable replacement for the existing mercury vapour lamps.

In one embodiment of the invention there is provided a retrofit LED lamp in which the bulb is provided with at least one air circulation aperture. By providing an air circulation aperture in the bulb, this will facilitate cooling of the LED lamp thereby improving longevity and luminance performance of the LED lamp.

In one embodiment of the invention there is provided a vapour barrier membrane adjacent the air circulation aperture to permit throughpassage of air through the air circulation aperture and prevent ingress of dirt or moisture into the bulb. The vapour barrier membrane is seen as a useful addition to the retrofit LED lamp as the vapour barrier membrane will permit air to flow through the LED thereby cooling the LED yet it will prevent ingress of dirt and moisture. This will enhance the ingress protection (IP) rating of the retrofit lamp thereby rendering it suitable for more outdoor lighting applications.

In one embodiment of the invention there is provided a retrofit LED lamp in which the air circulation aperture is located in an end cap of the cylindrical bulb.

In one embodiment of the invention the air circulation aperture is located in the side wall of the cylindrical bulb adjacent the base of the bulb proximal to the casing.

In one embodiment of the invention, the retrofit LED lamp comprises an inner, substantially cylindrical tube open at both ends substantially co-axial with the cylindrical bulb and in which the first end of the tube is connected to the casing surrounding the LED and the second end of the tube is adjacent but spaced apart from an end cap of the cylindrical bulb. By providing an inner tube, any moisture that enters into the bulb through the air circulation aperture is highly unlikely to reach the LED and potentially damage the LED as the inner tube is blocking the direct path to the LED. The hot air flow from the LED will travel out from the inner tube, through the gap between the second end of the tube and the end cap of the cylindrical bulb into the cylindrical bulb and from there will exit the bulb through the air circulation aperture.

In one embodiment of the invention there is provided a retrofit LED lamp in which the optical lighting film comprises a prismatic film operable to direct light radially outwardly from the cylindrical bulb. This is seen as a particularly suitable optical lighting film to use. In one embodiment of the invention the LED cooling component comprises an internal fan. Preferably, the internal fan is a maglev fan. In this way, the lamp will contain its own dedicated internal fan to cool the junction temperature of the LED thereby allowing the LED to operate within an acceptable temperature range.

In one embodiment of the invention the internal fan is positioned to direct an air flow over the rear surface of the LED. It is envisaged that the internal fan will preferably be positioned internal the casing underneath the LED and will direct air towards the rear surface of the LED. However, if the LED mounting plate extends across the rear surface of the LED, the air from the fan will be directed onto the rear surface of the LED indirectly through the mounting plate by directing air onto the mounting plate intermediate the fan and the rear surface of the LED.

In one embodiment of the invention the cooling component comprises a heat sink in thermal communication with the rear surface of the LED. By placing a heat sink in thermal communication with the rear surface of the LED, the heat sink will help reduce the junction temperature of the LED thereby improving LED performance and longevity. The heat sink may be in direct thermal communication or indirect thermal communication with the rear surface of the LED.

In one embodiment of the invention the LED mounting plate is constructed from a thermally conductive material and the heat sink is connected to the LED mounting plate.

In one embodiment of the invention the cooling component comprises a heat pipe in thermal communication with the LED.

In one embodiment of the invention there is provided an aperture in the casing for the heat pipe and the heat pipe protrudes outwardly through the casing to the exterior of the casing. This will allow for improved cooling by the heat pipe and will reduce the junction temperature of the LED.

In one embodiment of the invention the heat pipe is in thermal communication to one of the LED mounting plate and the heat sink.

In one embodiment of the invention there is provided an internal divider in the casing and in which the LED electronic circuitry is located substantially on one side of the internal divider adjacent the base, whereas the LED, the LED mounting plate and the LED cooling component are located substantially on the opposite side of the internal divider. In this way, the LED will be insulated in part from the heat generated by the electronic circuitry and the electronic circuitry will not materially affect the operation of the LED.

In one embodiment of the invention the internal divider is constructed from a thermal insulator material.

In one embodiment of the invention the casing is constructed from a thermally conductive material and in which the LED is in thermal communication with the casing. By constructing the casing from a thermally conductive material, the entire casing will thereby operate as a heat sink allowing heat to dissipate away from the casing and away from the LED junction.

In one embodiment of the invention there is provided a second, external end cap having a second air circulation aperture therein, the second external end cap being positioned against the end cap and in which there is provided a vapour barrier membrane sandwiched between the end cap and the second external end cap.

### Detailed Description of the Invention

The invention will now be more clearly understood from the following description of some embodiments thereof given by way of example only with reference to the accompanying drawings, in which:-
Figure 1 is a front, part cross-sectional view of a retrofit LED lamp according to the invention;
Figure 2 is an exploded view of the retrofit LED lamp shown in Figure 1;
Figure 3 is a plan view of the end cap of the cylindrical bulb;
Figure 4 is a perspective view of the end cap arrangement of the cylindrical bulb with vapour permeable membrane;
Figure 5 is a front view of an alternative construction of retrofit LED lamp according to the invention;
Figure 6 is an exploded view of the retrofit LED lamp shown in Figure 5;
Figures 7 to 10 are diagrammatic illustrations of air flow from the LED in the embodiment shown in Figures 5 and 6;
Figure 11 is a perspective view of a further alternative construction of retrofit LED lamp according to the invention;
Figure 12 is a front, part cross-sectional view of the retrofit LED lamp shown in Figure 11;
Figure 13 is a plan view of the retrofit LED lamp shown in Figure 11;
Figure 14 is a plan view of the heat sink casing of the retrofit LED lamp of Figure 11;
Figure 15 is a perspective view of the heat sink casing of the retrofit LED lamp of Figure 11;
Figure 16 is a side view of the heat sink casing of the retrofit LED lamp of Figure 11;
Figure 17 is a top perspective view of the heat sink end plate of the retrofit LED lamp of Figure 11;
Figure 18 is a bottom perspective view of the heat sink end plate of Figure 17; and
Figure 19 is a side view of the heat sink end plate of Figure 17.

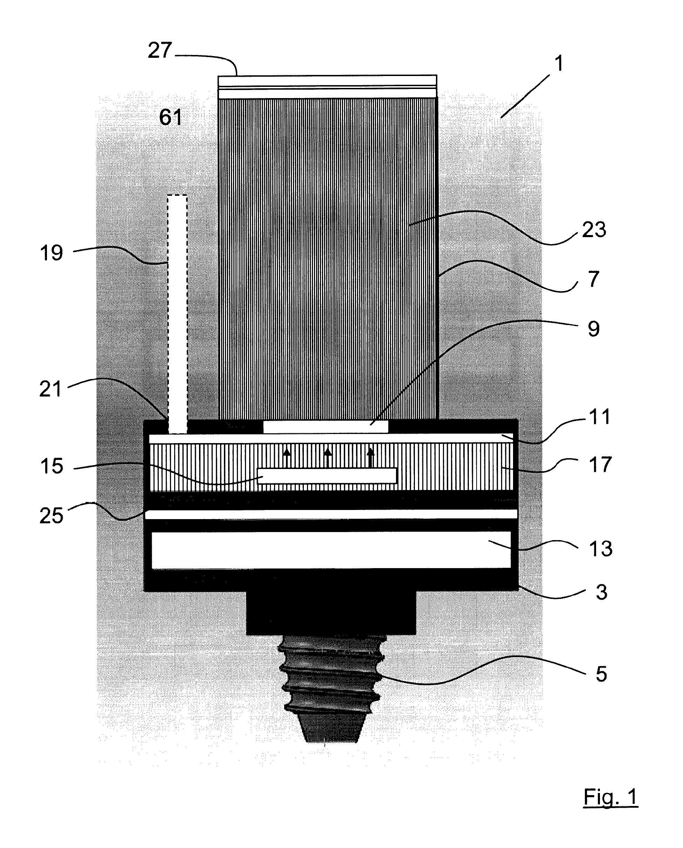

Referring to Figure 1, there is shown a retrofit LED lamp, indicated generally by the reference numeral 1, comprising a casing 3, a base 5 protruding outwardly from the casing 3 and a substantially cylindrical bulb 7 protruding outwardly from the casing 3. The bulb 7 protrudes outwardly from the end of the casing opposite the base 5. The base 5, in the embodiment shown, is an E27 electrical connection although it will be understood that other types of lamp base, such as a bayonet cap could be used instead. The retrofit LED lamp 1 further comprises an LED 9 housed, in this instance, in the casing and positioned to emit light directed into the substantially cylindrical bulb 7. The casing 3 also houses an LED mounting plate 11, LED electronic circuitry 13 and an LED cooling component, in this case provided by way of a fan 15 and a heat sink 17.

A further cooling component may be provided by way of a heat pipe 19, shown in dashed outline, which is connected at one end to the LED mounting plate 11 and extends upwardly therefrom and protrudes outwardly through an aperture 21 in the casing 3 so that it is located predominantly external the casing 3. There is provided an optical lighting film 23 covering the cylindrical surface of the bulb. A spacer 25 is provided internal the casing 3 to separate the LED electronic circuitry 13 from the LED 9, the LED mounting plate 11 and the LDE cooling components 15, 17. The spacer 25 is preferably constructed from an insulator material and provides a thermal barrier between the LED 9 and the LED electronic circuitry 13. It will be understood that wiring (not shown) will be passed through the spacer 25 between the LED 9 and the LED electronic circuitry 13 and between the LED electronic circuitry 13 and the fan 15.

In use, the base 5 of the retrofit LED lamp 1 is plugged into a lamp socket (not shown) and power is delivered to the LED electronic circuitry 13 through the base 5. The LED electronic circuitry in turn will supply power to both the LED 9 and the fan 15. The fan 15 is operable to direct air towards the rear surface of the LED 9. In this instance, the LED 9 is mounted on an LED mounting plate 11 and therefore the air is directed towards the rear surface of the LED 9 indirectly, through the LED mounting plate 11 which is thermally coupled to the LED 9. The LED 9 directs light emitted from the LED array up into the substantially cylindrical bulb 7. The light coming from the LED 9 will come into contact with the optical lighting film on the interior surface of the bulb 7 and the light rays that are not reflected by the optical lighting film are directed outwardly from the bulb in a practically omnidirectional manner. By having a cylindrical bulb with an optical lighting film, the light distribution from the retrofit LED lamp is far more evenly spread than would otherwise be the case, thereby producing a luminance effect that is comparable to and a suitable replacement for a mercury vapour lamp.

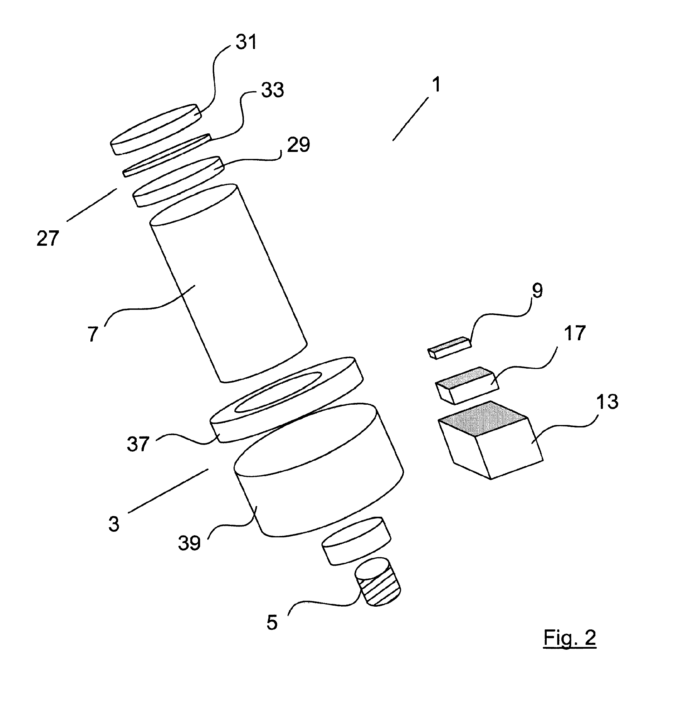

Air vents (not shown) may be provided in the casing to allow escape of heat from the casing and to ensure the fan is circulating cold air against the LED. However, suitable measures, such as the provision of a vapour permeable membrane, may be used in conjunction with the air vents so as not to diminish significantly the ingress protection (IP) rating of the retrofit LED lamp. The bulb 7 preferably terminates in an end cap 27 arranged to permit air flow through the bulb 7 yet prevent ingress of dirt and moisture. The end cap comprises an inner end cap 29, an outer end cap 31 and a vapour permeable membrane 33 sandwiched therebetween. The inner end cap 29 and outer end cap 31 each have at least one, and preferably a plurality of air circulation apertures (not shown) formed therein. The inner end cap 29 and the outer end cap 31 along with the vapour permeable membrane 33 are arranged to permit flow of air therethrough but to prevent ingress of dirt and moisture. It is not suggested that the bulb needs to be completely waterproof however it is envisaged that an IP rating of 54 would be sufficient for most purposes. Other IP ratings could suffice and be provided also if required. This arrangement will be described in more detail with reference to Figures 2 to 4 inclusive below.

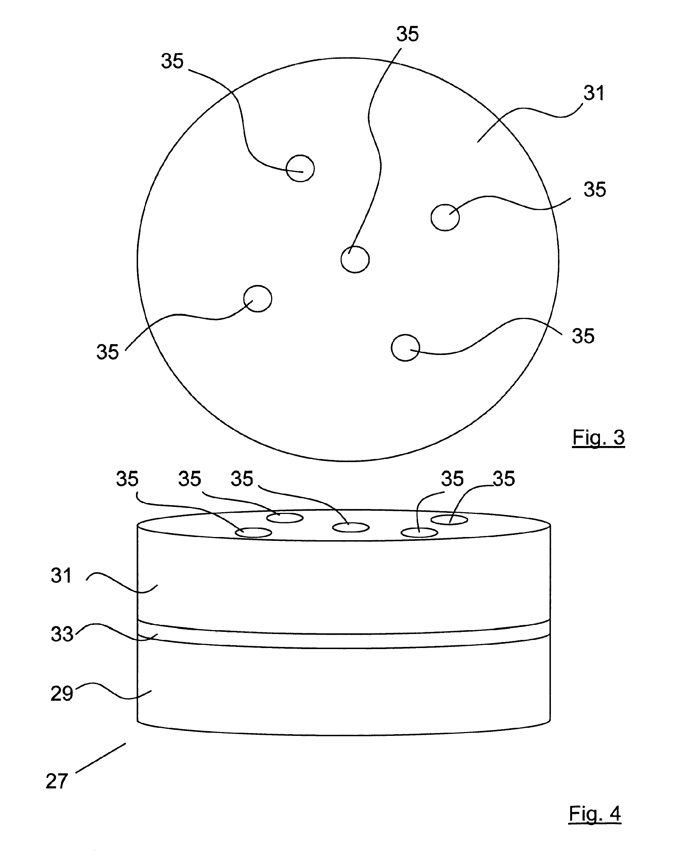

Referring to Figure 2, there is shown an exploded view of the retrofit LED lamp 1 according to the invention. It can be seen that the end cap 27 comprises an inner end cap 29, an outer end cap 31, and a vapour permeable membrane 33. The casing 3 comprises a two part casing, with an upper part 37 and a lower part 39. Referring to Figure 3, there is shown a plan view of the outer end cap 31. It is envisaged that the inner end cap (not shown) will be of an identical construction. The outer end cap 31 comprises a plurality of air circulation apertures 35 for through passage of air. Referring to Figure 4, there is shown an enlarged view of the end cap arrangement 27. The vapour permeable membrane 33 is sandwiched between the inner end cap 29 and the outer end cap 31. The vapour permeable membrane in this case is that sold by the company Proclima ® under the trade mark Intello ®. Alternatively, the material sold under the trade mark Gore-Tex ® could be used or further still a material having similar properties that allows air circulation and prevents moisture ingress.

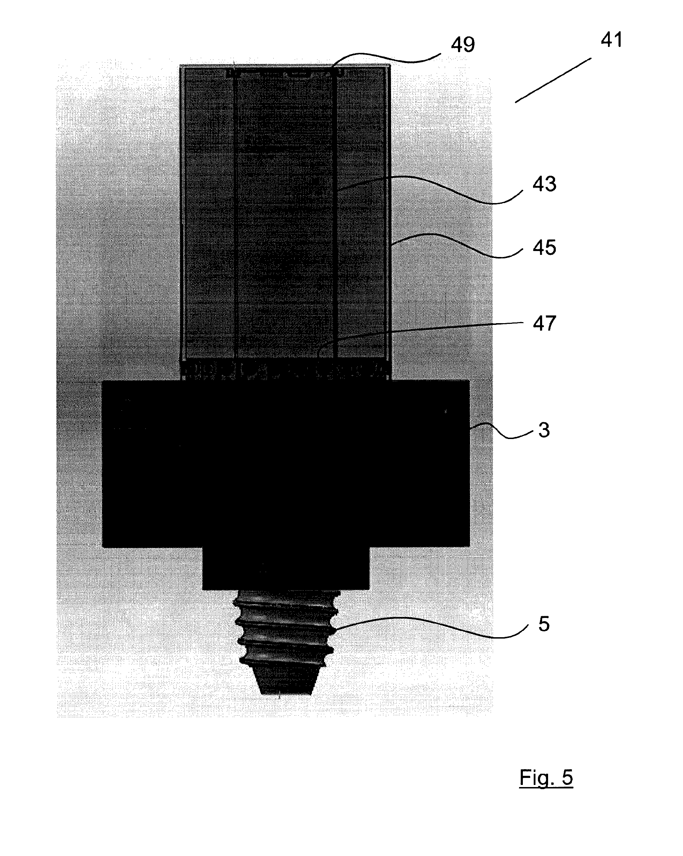

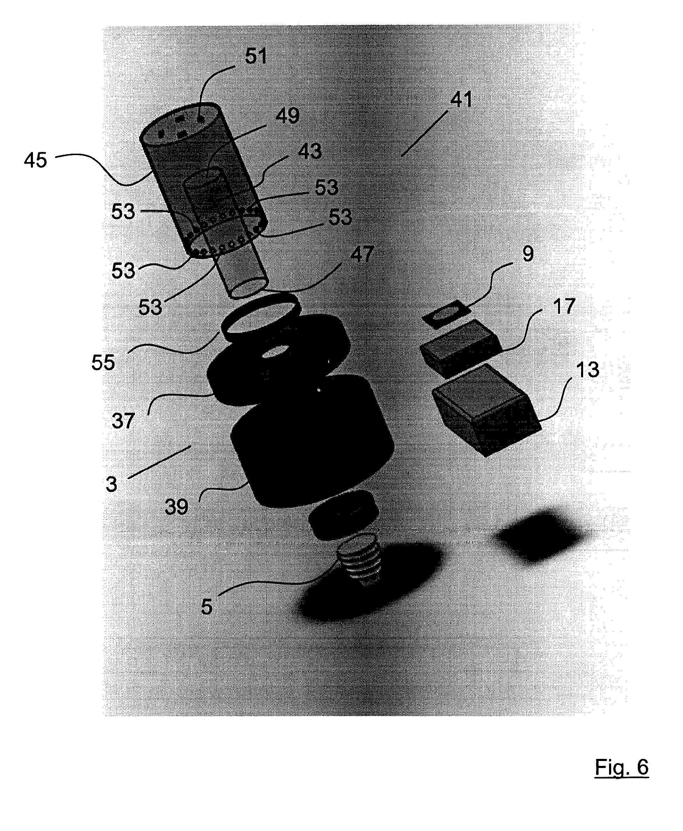

Referring to Figures 5 and 6, there are shown a pair of views of an alternative construction of retrofit LED lamp according to the present invention, indicated generally by the reference numeral 41, where like parts have been given the same reference numeral as before. The retrofit LED lamp 41 differs from the previous embodiment shown in Figures 1 to 4 in that there is provided an inner tube 43, open at both ends, which fits inside the bulb 45. The inner tube is substantially coaxial with the outer cylindrically shaped bulb 45. The first end 47 of the inner tube 43 surrounds the LED 9 whereas the second end 49 of the inner tube is spaced apart from the end cap 51 of the bulb 45. The bulb 45 has a plurality of air circulation apertures 53 circumferentially spaced about its base adjacent the casing 3. An annular vapour permeable membrane 55 is provided for effectively sealing the air circulation apertures from dirt and moisture ingress while permitting air ingress and egress.

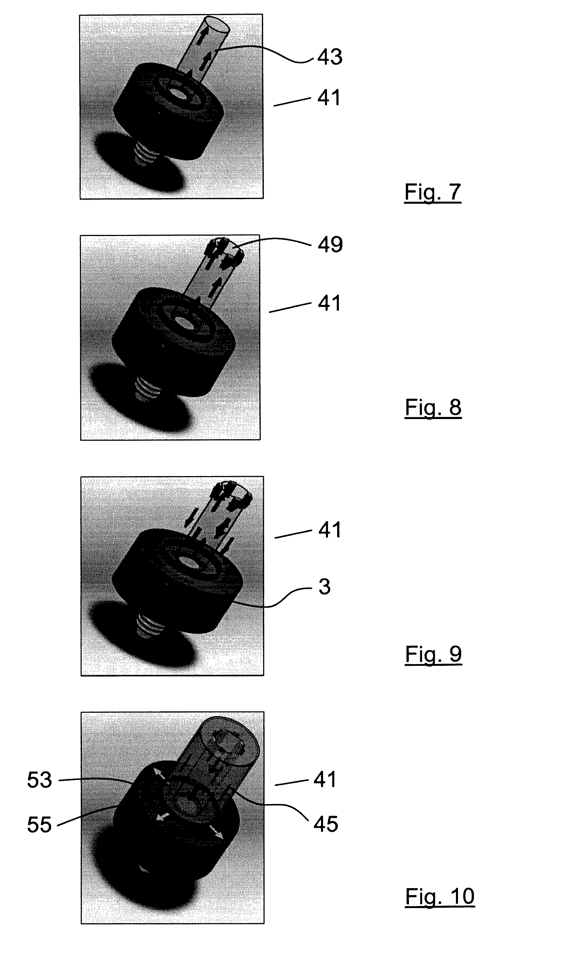

Referring to Figures 7 to 10 inclusive, there is shown an illustration of the air flow inside the retrofit LED lamp 41. In Figure 7, the bulb has been removed for clarity, hot air rises from the LED 9. This hot air travels upwards along the inner tube 43. Referring to Figure 8, once the air reaches the second end 49 of the tube, it will abut against the end cap (not shown) and will be directed outwardly into the bulb (not shown). Referring to Figure 9, the air flow will travel downwards along the interior of the bulb between the bulb and the inner tube back towards the casing 3. In Figure 10, the hot air that arrives at the casing 3 will make its way outwards to the atmosphere past the vapour permeable membrane 55 through the air circulation apertures 53 in the bulb 45. That air will be replaced with cold air drawn in through the air circulating apertures which will travel in the opposite direction thereby creating a circular flow.

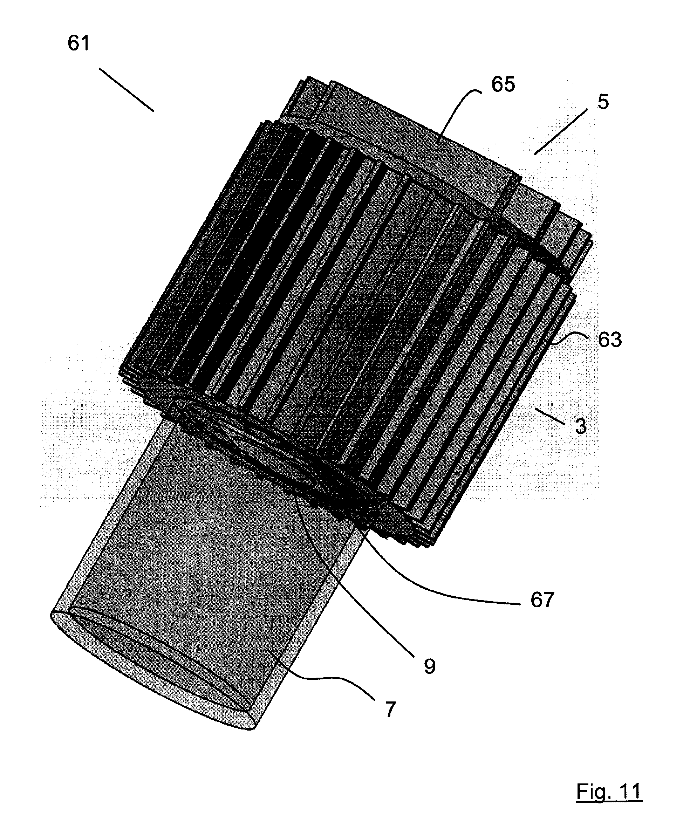

Referring to Figures 11 to 13 inclusive, there is shown a further alternative embodiment of retrofit LED lamp according to the invention, where like parts have been given the same reference numeral as before, indicated generally by the reference numeral 61. Referring specifically to Figure 11, the retrofit LED lamp 61 comprises a casing indicated generally by the reference numeral 3, and a base indicated generally by the reference numeral 5. The base protrudes outwardly from the casing 3 and a substantially cylindrical bulb 7 also protrudes outwardly from the casing 3. The bulb 7 protrudes outwardly from the end of the casing opposite the base 5.

In the embodiment shown, an E27 electrical connection would typically be provided as the base 5 however the electrical connection has been removed for clarity. It will be understood that other types of electrical connection, such as a bayonet cap could be used instead of the E27 electrical connection.

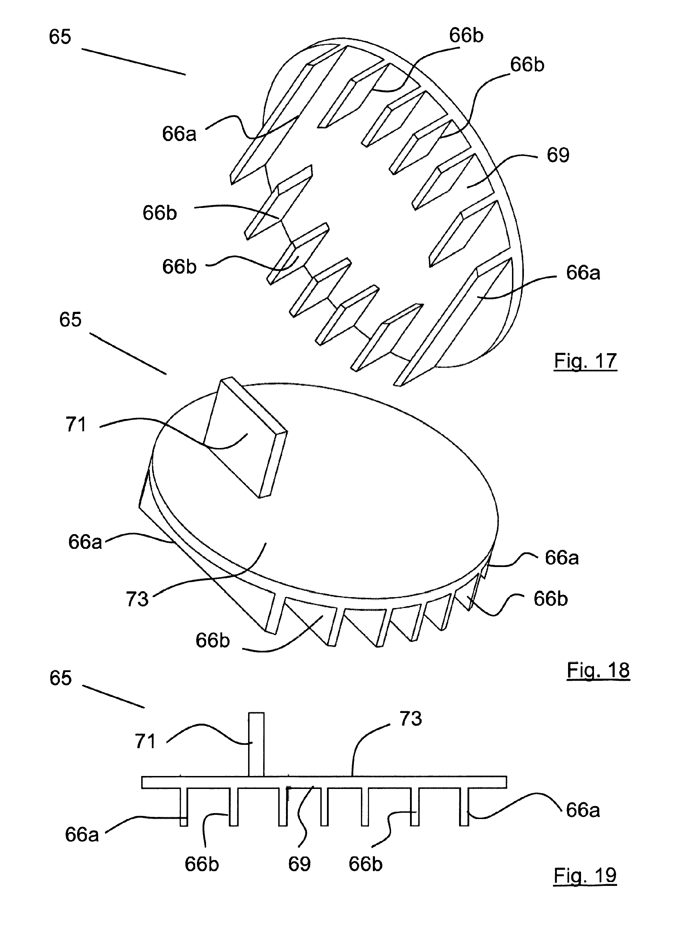

The retrofit LED lamp 61 further comprises an LED 9 housed, in this instance, in the bulb 7 and positioned to emit light directed into the substantially cylindrical bulb 7. The casing 3 also houses an LED mounting plate 11, LED electronic circuitry (not shown) and LED cooling components. In this case, the LED cooling components comprise a heat sink casing 63 and a heat sink end cap 65. The heat sink casing 63 surrounds and is in thermal communication with the remainder of the casing 3 and indeed the heat sink casing may be formed integrally with the casing 3. Similarly, the heat sink end cap 65 is in thermal communication with the casing and the heat sink casing 63. The heat sink end cap 65 may be formed integrally with the base 5 or may be a separate component. It is envisaged that the heat sink end cap will be electrically insulated from the base 5. It can be seen that the heat sink casing 63 comprises a plurality of fins 64 circumferentially spaced around the casing and protruding radially outwardly from the casing. The heat sink end cap 65 comprises a plurality of fins 66, the arrangement of which will be described in more detail below with reference to Figures 17 to 19 inclusive. In addition to the heat sink casing 63 and a heat sink end cap 65, there are provided a plurality of apertures 67 formed in the casing, internal the bulb and surrounding the LED 9 and the LED mounting plate 11. These apertures allow for enhanced heat dissipation.

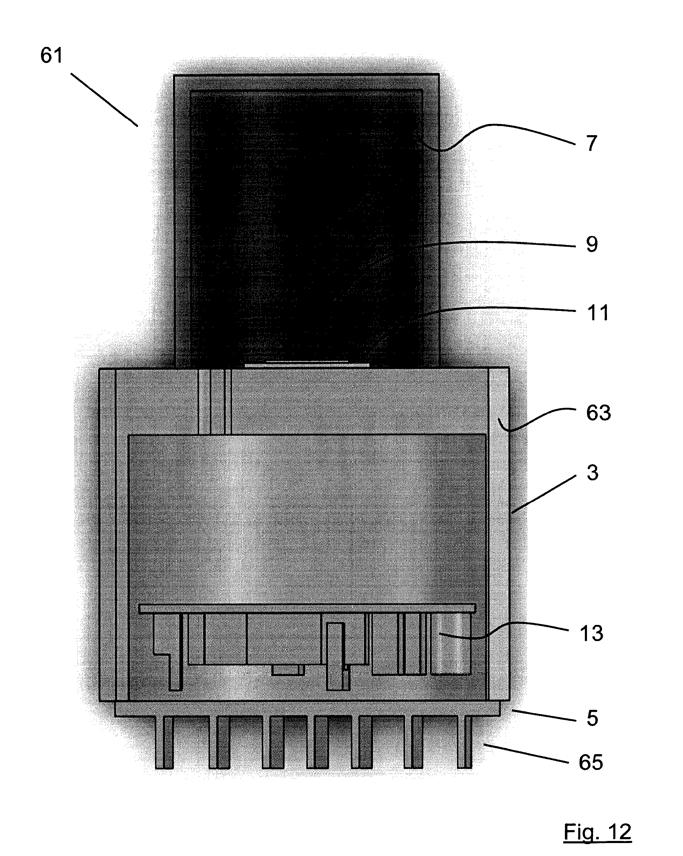

Referring specifically to Figure 12, there is shown a part cross sectional view of the retrofit LED lamp 61. The LED electronic circuitry 13 is mounted internal the casing spaced apart from the LED in the casing. It can be seen from Figure 12 that the substantially cylindrical bulb 7 in the present implementation is a single cylinder, open at one end, the end adjacent the LED and the casing. The substantially cylindrical bulb 7 is closed at the other end remote from the LED array. There are no apertures in the end plate of the cylindrical bulb 7 and this will provide good ingress protection. As well as having optical lighting film mounted on the curved side wall of the substantially cylindrical bulb 7, a disc shaped sheet of optical lighting film is also provided on the closed end of the substantially cylindrical bulb 7.

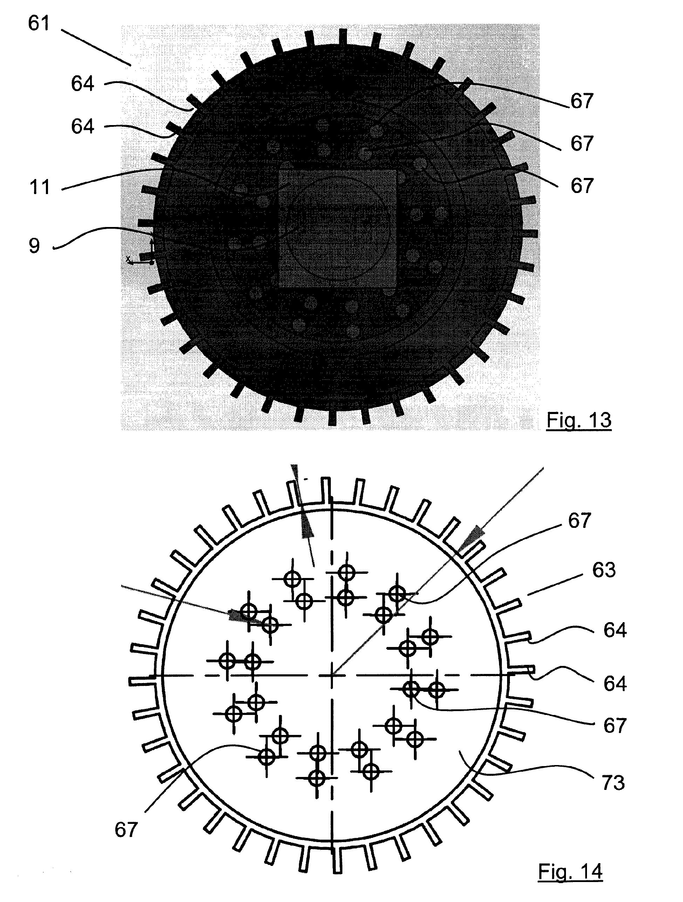

Referring specifically to Figure 13, there is shown a plan view of the retrofit LED lamp 61 in which the fins 64 of the heat sink casing 63 and the apertures 67 in the casing surrounding the LED array 9 can be seen.

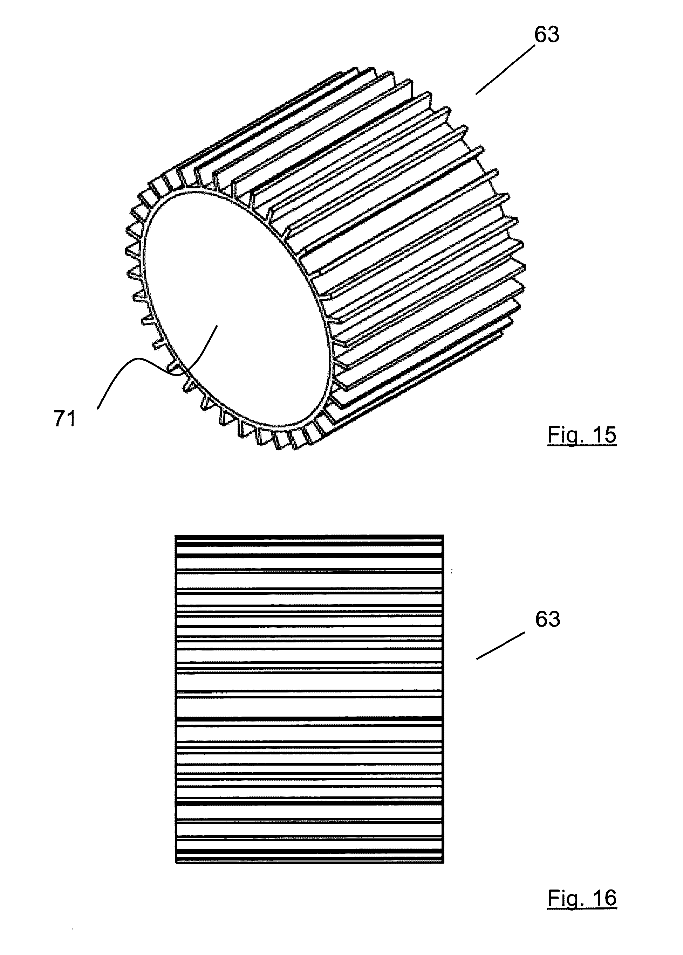

Referring to Figures 14 to 16 inclusive, there are shown a plurality of views of the heat sink casing 63. The heat sink casing 63 is open at one end 71 to allow insertion of electronics and other components into the heat sink casing 63. As indicated above, the heat sink casing 63 may form the casing 3 or may be separate thereto. If separate to the casing, the heat sink casing 63 will effectively sleeve a casing 3 on the outside of the casing 3. The other end 73 of the heat sink casing is provided with a plurality of apertures 67 for thermal management and one or more apertures are also provided to allow throughpassage of electrical cabling to the LED array 9 through the end 73.

Referring to Figures 17 to 19 inclusive, there are shown a plurality of views of the heat sink end cap 65. The heat sink end cap 65 comprises a plurality of outwardly protruding fins 66 on one, external surface 69. There are two long fins 66a at each side and shorter spaced apart fins 66b therebetween. The spacing between the shorter fins 66b leaves a space in the middle of the heat sink end cap for an electrical connection (not shown) for connecting the retrofit LED lamp 61 up to a socket and providing electricity to the LED electronic circuitry 13. The heat sink end cap 65 comprises a further protruding fins 71 on the opposite, internal surface 73. This fin 71 can be used to mount the electronic circuitry and provide a thermal connection between the LED electronic circuitry and the heat sink end cap 63.

It will be understood that various modifications could be made to the embodiments described without departing from the spirit of the invention. For example, alternative cooling arrangements could be provided and different constructions of air circulation apertures could be provided. If IP ratings are of no concern, different constructions to permit freer air flow over the LEDs could be used. For example, it may not be necessary to provide an end cap 27 in some instances, thereby allowing air to circulate freely over the LED effectively cooling the LED and controlling junction temperature.

In the embodiment shown, the LED is in fact an LED array, more specifically it is a ceramic-on-board (COB) LED covered with yellow phosphor to provide a useful visible spectrum light. The fan is a magnetic levitation (maglev) fan and the casing 3 is preferably constructed from a thermally conducting material to permit greater heat transfer away from the LED. Other components could be used to good effect if desired. The casing 3 shown in cylindrical however although this is preferred it is not essential. The bulb on the other hand, by having a substantially cylindrical construction, will provide highly effective light distribution.

In the embodiment shown, the optical lighting film is a prismatic film such as that produced by 3M (Registered Trade Mark, ®) and sold under the name "2301 OLF". 2301 OLF is constructed from optical grade polycarbonate and is relatively flexible, allowing it to be cut to size and shaped to form a cylindrically shaped bulb and fit inside the cylindrically shaped bulb. Preferably, the optical lighting film is mounted against the internal bulb wall however it will be understood that it may be spaced apart from the bulb wall internally or externally and could be mounted on the exterior of the bulb wall. Preferably, the optical lighting film prisms will each have 90° prism angle.

In this specification the terms "comprise, comprises, comprised and comprising" and the terms "include, includes, included and including" are all deemed totally interchangeable and should be afforded the widest possible interpretation. The invention is in no way limited to the embodiments hereinbefore described but may be varied in both construction and detail within the scope of the claims.

## Claims

1. A retrofit light emitting diode (LED) lamp (1, 41, 61) comprising a casing (3), a base (5) protruding outwardly from the casing (3) and a substantially cylindrical bulb (7) protruding outwardly from the casing, an LED (9) housed in one of the bulb and the casing and positioned to emit light directed into the substantially cylindrical bulb (7), the casing housing an LED mounting plate (11) and an LED electronic circuitry (13), the retrofit light emitting diode having an LED cooling component (63, 65), and in which there is provided an optical lighting film covering the cylindrical surface of the bulb (7).

2. A retrofit LED lamp (1, 41, 61) as claimed in claim 1 in which the bulb is provided with at least one air circulation aperture.

3. A retrofit LED lamp (1, 41, 61) as claimed in claim 1 or 2 in which the casing (5) is provided with at least one air circulation aperture (67), the aperture being located on the casing (3) internal the bulb (7) thereby providing a fluid passageway between the interior of the bulb (7) and the casing (3).

4. A retrofit LED lamp (1, 41, 61) as claimed in claim 2 in which the air circulation aperture is located in the side wall of the cylindrical bulb adjacent the base of the bulb proximal to the casing.

5. A retrofit LED lamp (1, 41, 61) as claimed in claim 4 in which there is provided an inner substantially cylindrical tube open at both ends substantially co-axial with the cylindrical bulb (7) and in which the first end of the tube is connected to the casing surrounding the LED and the second end of the tube is adjacent but spaced apart from an end cap of the cylindrical bulb.

6. A retrofit LED lamp (1, 41, 61) as claimed in any preceding claim in which the optical lighting film comprises a prismatic film operable to direct light radially outwardly from the cylindrical bulb.

7. A retrofit LED lamp (1, 41, 61) as claimed in claim 6 in which the optical lighting film prisms have a 90° prism angle.

8. A retrofit LED lamp (1, 41, 61) as claimed in any preceding claim in which the cooling component comprises a heat sink in thermal communication with the rear surface of the LED (9).

9. A retrofit LED lamp (1, 41, 61) as claimed in claim 8 in which the LED mounting plate (11) is constructed from a thermally conductive material and the heat sink is connected to the LED mounting plate.

10. A retrofit LED lamp (1, 41, 61) as claimed in any preceding claim in which the cooling component comprises a heat sink casing (63) having a plurality of circumferentially spaced cooling fins (64) protruding outwardly therefrom.

11. A retrofit LED lamp (1, 41, 61) as claimed in any preceding claim in which the cooling component comprises a heat sink end plate (65) having a plurality of fins (66) protruding outwardly therefrom.

12. A retrofit LED lamp (1, 41, 61) as claimed in which there is provided an internal divider in the casing constructed from a thermal insulator material and in which the LED electronic circuitry (13) is located substantially on one side of the internal divider adjacent the base, whereas the LED (9), the LED mounting plate (11) and the LED cooling component are located substantially on the opposite side of the internal divider.

13. A retrofit LED lamp (1, 41, 61) as claimed in any preceding claim in which the casing is constructed from a thermally conductive material and in which the LED (9) is in thermal communication with the casing.

14. A retrofit LED lamp (1, 41, 61) as claimed in claim 3 in which there are provided a plurality of air circulation apertures on the casing surrounding the LED (9)
